**Europäisches Patentamt**

**European Patent Office**

**Office européen des brevets**

(19)

(11) Veröffentlichungsnummer: **0 086 744**
**B1**

(12)  # EUROPÄISCHE PATENTSCHRIFT

(45) Veröffentlichungstag der Patentschrift:
**27.12.85**

(51) Int. Cl.⁴: **C 08 G 59/40,** C 08 G 59/72

(21) Anmeldenummer: **83810048.5**

(22) Anmeldetag: **07.02.83**

(54) **Heisshärtbare Massen aus einem Epoxidharz, einem latenten Härter und einem organischen Oxydationsmittel.**

(30) Priorität: **11.02.82 GB 8204053**

(43) Veröffentlichungstag der Anmeldung:
**24.08.83 Patentblatt 83/34**

(45) Bekanntmachung des Hinweises auf die Patenterteilung:
**27.12.85 Patentblatt 85/52**

(84) Benannte Vertragsstaaten:
**BE CH DE FR GB IT LI NL SE**

(56) Entgegenhaltungen:
**DE - B - 1 240 282**

**CHEMICAL ABSTRACTS, Band 93, 1980, Seite 33, Nr. 115432e, Columbus, Ohio, USA**

(73) Patentinhaber: **CIBA-GEIGY AG, Klybeckstrasse 141, CH-4002 Basel (CH)**

(72) Erfinder: **Irving, Edward, Dr., 41, Swaffham Road, Burwell Cambridge CB5 0AN (GB)**

**Beschreibung**

Vorliegende Erfindung betrifft heißhärtbare, aus Epoxidharzen, bestimmten Lewissäuren als latenten Härtern für Epoxidharze und organischen Oxidationsmitteln bestehende Massen sowie deren Verwendung als Laminier- und Preßharze, Oberflächenbeschichtungen, Klebstoffe und dergleichen.

Latente Härter für Epoxidharze (d. h. im Durchschnitt mehr als eine 1,2-Epoxidharze pro Molekül enthaltende Substanzen) sind wohlbekannt. Solche Materialien lassen sich mit dem Epoxidharz vermischen und längere Zeit bei Raumtemperatur oder darunter lagern, ohne Vernetzung des Harzes herbeizuführen; Vernetzung in merklichem Umfang tritt erst beim Erhitzen des Gemisches ein. Typische solche Härter sind Lewissäuren, wie Komplexe des Bortrifluorids, insbesondere die Aminkomplexe. Die Anwendung solcher Komplexe ist von Lee und Neville in »Handbook of Epoxy Resins [Handbuch der Epoxidharze]«, McGraw-Hill Inc., 1967, Kapitel 11, S. 2 bis 8, sowie von May und Tanaka in »Epoxy Resins — Chemistry and Technology [Epoxidharze — Chemie und Technik]«, Marcel Dekker Inc., 1973, S. 202, beschrieben.

Diese Komplexe werden üblicherweise als Härter für Epoxidharze eingesetzt, worin mindestens eine der 1,2-Epoxidgruppen als 2,3-Epoxipropylgruppe vorliegt, typischerweise Diglycidyläther von Bisphenolen bei Verwendung für mit ihnen reaktionsfähigere Epoxidharze, wie epoxicycloaliphatische Verbindungen, ist die Lagerfähigkeit der Gemische stark herabgesetzt. Ein bekannter Nachteil bei der Verwendung dieser Härter für mehr als eine 2,3-Epoxipropylgruppe enthaltende Epoxidharze ist die verhältnismäßig lange Zeit, für die sie mit solchen Harzen erhitzt werden müssen, um Gelierung und Härtung zu bewirken. Es wäre offensichtlich wünschenswert, ein Gemisch zur Verfügung zu haben, das sehr rasch härtet, sobald es über eine bestimmte kritische Temperatur erhitzt wird, aber unterhalb dieser Temperatur längere Zeit stabil bleibt. Es wurde nun gefunden, daß diese Aufgabe dadurch gelöst werden kann, daß man bestimmte organische Oxidationsmittel in dem Epoxidharz/Härtergemisch mitverwendet.

Der Einbau eines organischen Oxidationsmittels (Benzoylperoxyd) in eine ein Epoxidharz und eine Lewissäure als latenten Härter (einen Bortrifluorid/Triäthanolaminkomplex) enthaltende Masse ist bekannt, wie in JA-A-103 985/1974 beschrieben. Das angegebene Gemisch enthielt ferner ein äthylenisch ungesättigtes Monomer, 2-Hydroxyäthylacrylat, und der Zweck des Oxidationsmittels bestand darin, die Polymerisation dieses Monomeren zu bewirken.

Die Polymerisation dieses Monomeren unter Bedingungen, bei denen das Epoxidharz ungehärtet blieb, wurde von dieser Anmelderin in unveröffentlichten Versuchen aufgezeigt. Ein Gemisch aus 19,1 Gewichtsteile Epoxidharz (einem Polyglycidyläther des 2,2-Bis-(4-hydroxyphenyl)-propans mit einem 1,2-Epoxidgehalt von 5,16 val/kg), 0,86 Gewichtsteilen Bortrifluorid/Monoäthylaminkomplex und 2 Gewichtsteilen 2-Hydroxyäthylacrylat wurde 11 Wochen bei 25° C gelagert, währenddessen seine bei 25° C gemessene Viskosität von 0,8 Pa s auf 2,35 Pa s, d. h. etwa 3fach zunahm. Bei einem ähnlichen Gemisch, das aber noch 0,6 Gewichtsteile einer 50%igen Benzoylperoxyddispersion in Dibutylphthalat enthielt, nahm die Viskosität über den gleichen Zeitraum und unter den gleichen Bedingungen von 0,7 Pa s auf 8,5 Pa s, d. h. ungefähr 12fach zu. Die Viskosität eines ähnlichen Gemischs, aber ohne 2-Hydroxyäthylacrylat, nahm von 11 Pa s auf 51 Pa s, d. h. etwa 4,6fach zu. Der starke Viskositätsanstieg, der nur in Gegenwart sowohl des monomeren Acrylats als auch des Peroxyds auftrat, weist darauf hin, daß bei der Lagerung bei 25° C Polymerisation dieses Monomeren eintritt.

Der Einbau eines Epoxidharzes mit einem anderen polymerisierbaren Stoff zusammen mit einem Härter für das Epoxidharz und einem Peroxydhärter für den anderen polymerisierbaren Stoff ist vergleichsweise häufig, wie aus den folgenden Literaturstellen ersichtlich.

In US-A-3 072 606 und 3 072 607 werden Massen beschrieben, die ein Epoxidharz, Bortrifluorid, gegebenenfalls als Aminkomplex, ein Peroxyd und im ersten dieser Patente einen cyclischen Äther oder Thioäther und im zweiten eine Verbindung mit mindestens zwei Furan- oder Thiophenringen enthalten. In beiden Patenten wird angegeben, daß man ein Peroxyd als üblichen Beschleuniger für die Copolymerisation des Epoxidharzes mit der cyclischen Verbindung zusetzen kann. In den zwei Beispielen, bei denen ein Peroxyd eingesetzt wird, liegt das Bortrifluorid nicht als Aminkomplex vor, und rasche Härtung des Gemischs tritt bei Raumtemperatur ein.

Ein Epoxidharz, einen ungesättigten Polyester, einen Bortrifluorid/Aminkomplex und ein organisches Peroxyd enthaltende Massen sind in DE-B-1 240 282 (Derwent C.P.I. Referat Nr. 83 839 P) beschrieben. Peroxyde sind wohlbekannt als Katalysatoren für die Härtung ungesättigter Polyester, und ihre Gegenwart in solchen Massen ist keineswegs ungewöhnlich. Es liegt somit kein Hinweis darauf vor, daß das Peroxyd irgendeine Wirkung auf die Härtung des Epoxidharzes hat.

Ein Diallylphthalat- oder Dimethallylphthalatpräpolymer oder -telomer, ein Epoxidharz, ein organisches Peroxyd als Polymerisationskatalysator für das Präpolymer oder Telomer sowie einen Heißhärter für das Epoxidharz, wie einen Bortrifluorid/Aminkomplex, enthaltende Massen sind in GB-A-1 223 338 offenbart. Es wird kein Beispiel für die Verwendung eines Bortrifluorid/Aminkomplexes in solchen Gemischen angeführt, und die Patentschrift enthält keine Angaben über die Wirkung eines Peroxydzusatzes zu einer solchen Masse in Abwesenheit des Phthalatpräpolymeren oder -telomeren.

Aus US-A-3 657 381 sind Polyvinylchlorid, ein Epoxidharz, einen Ester mit mindestens drei Acryl- oder Methacrylresten sowie gegebenenfalls noch ein Peroxyd und einen Härter für das Epoxidharz,

2

wie einen Bortrifluoridkomplex, enthaltende Massen bekannt. Ein Beispiel gibt die Verwendung eines Bortrifluorid/Aminkomplexes in einer Cumylhydroperoxyd, ein Epoxidharz und ein Tetramethacrylat enthaltenden Masse an. Die Auswirkung des Vermischens eines Epoxidharzes mit einem latenten Härter und einem Peroxyd in Abwesenheit eines radikal-härtbaren Monomeren wird dabei nicht besprochen.

JA-A-36 800/1974 (Derwent C.P.I. Nr. 84 988 V/49) offenbart die Herstellung von Präpregs und Schichtkörpern unter Verwendung einer ein Epoxidharz, ein Bis-maleinimid und ein Diamin enthaltenden Masse. In einem Beispiel enthielt eine solche Masse auch den Bortrifluorid/Äthylaminkomplex und Äthylmethylketonperoxyd.

Schließlich beschreibt JA-A-58 172/1975 (Derwent C.P.I. Nr. 85 296 W/52) die Herstellung von Präpregs aus ein Epoxidharz (Triglycidylisocyanurat), ein flüssiges Polybutadien, ein organisches Peroxyd und gegebenenfalls einen Bortrifluorid/Aminkomplex enthaltenden Massen.

Es wird angenommen, daß der Einbau eines organischen Oxydationsmittels in ein Gemisch, das ein Epoxidharz und einen Bortrifluorid/Aminkomplex enthält und weitgehend frei von anderen kationisch polymerisierbaren Materialien ist, neu ist, und daß der Beschleunigungseffekt des Oxydationsmittels auf die Härtungswirkung des Bortrifluoridkomplexes nicht aus den Offenbarungen des oben erwähnten Standes der Technik vorauszusagen war.

Die Beschleunigung der Härtung von Epoxidharzen mit Antimonverbindungen durch Peroxyde ist in GB-A-1 033 263 beschrieben. Die in dieser Patentschrift erwähnten Antimonverbindungen sind keine latenten Härter, da mit ihnen die Härtung des Epoxidharzes schon bei Raumtemperatur beginnt. Das Peroxyd beschleunigt diese Härtung bei Raumtemperatur. Dabei wird die Möglichkeit angegeben, eine weniger reaktionsfähige Antimonverbindung, ein stabileres Peroxyd und ein weniger reaktionsfähiges Epoxid zu verwenden, um Gemische zu erhalten, die einige Tage oder Wochen lang bei Raumtemperatur stabil sind, aber beim Erhitzen rasch polymerisieren. Eine derartige verlängerte Stabilität wird aber anscheinend ausschließlich durch die Anwendung weniger reaktionsfähiger Mittel bewirkt. Die Patentschrift zeigt jedoch, daß Peroxyde aktive Beschleuniger für die Härtung von Epoxidharzen bei Raumtemperatur sind. Es ist deshalb überraschend, daß ein Gemisch aus einem Epoxidharz, einem latenten Härter und einem organischen Oxydationsmittel bei Raumtemperatur im wesentlichen so stabil ist wie dasselbe Gemisch ohne organisches Oxydationsmittel und solche das Oxydationsmittel enthaltende Gemische trotzdem beim Erhitzen über ihre kritische Temperatur viel schneller härten als ein Gemisch ohne Oxydationsmittel.

Gegenstand dieser Erfindung sind demnach heißhärtbare Massen, im wesentlichen frei von ungesättigtem polymerisierbaren Material, welche dadurch gekennzeichnet sind, daß sie aus (a) einem mehr als eine 2,3-Epoxipropylgruppe pro Durchschnittsmolekül enthaltenden Epoxidharz und einer heißhärtenden Menge eines Gemisches aus (b) einem Bortrifluorid/Aminkomplex als latente Härter für Epoxidharze und (c) einem unter Chinonen, Peroxyden und aromatischen Jodosoverbindungen ausgewählten organischen Oxydationsmittel bestehen.

Ein weiterer Gegenstand dieser Erfindung ist die Verwendung der erfindungsgemäßen, heißhärtbaren Massen zur Herstellung von Formstoffen, Beschichtungen oder Verklebungen.

Die Komponente (a) weist vorzugsweise direkt an ein Sauerstoffatom bzw. -atome gebundene 2,3-Epoxipropylgruppen auf.

Als Beispiele für solche Harze seien durch Umsetzung einer Verbindung mit zwei oder mehr Carbonsäuregruppen pro Molekül mit Epichlorhydrin oder Glycerindichlorhydrin in Gegenwart von Alkali erhältliche Polyglycidylester genannt. Solche Polyglycidylester können sich von aliphatischen Polycarbonsäuren, z. B. Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren wie Tetrahydrophthalsäure, 4-Methyltetrahydrophthalsäure, Hexahydrophthalsäure und 4-Methylhexahydrophthalsäure sowie von aromatischen Polycarbonsäuren wie Phthalsäure, Isophthalsäure und Terephthalsäure ableiten.

Weitere Beispiele sind Polyglycidyläther, die durch Umsetzung einer mindestens zwei freie alkoholische und/oder phenolische Hydroxylgruppen pro Molekül enthaltenden Verbindung mit Epichlorhydrin unter alkalischen Bedingungen, oder auch in Gegenwart eines sauren Katalysators mit nachfolgender Alkalibehandlung, erhältlich sind. Diese Äther lassen sich aus acyclischen Alkoholen wie Äthylenglykol, Diäthylenglykol und höheren Poly-(oxyäthylen)-glykolen, Propan-1,2-diol und Poly-(oxypropylen)-glykolen, Propan-1,3-diol, Poly-(oxytetramethylen)-glykolen, Pentan-1,5-diol, Hexan-2,4,6-triol, Glycerin, 1,1,1-Trimethylolpropan, Pentaerythrit, Sorbit und Polyepichlorhydrinen, aus cycloaliphatischen Alkoholen wie Resorcit, Chinit, Bis-(4-hydroxycyclohexyl)-methan und 2,2-Bis-(4-hydroxycyclohexyl)-propan sowie aus Alkoholen mit aromatischen Kernen, wie N,N-Bis-(2-hydroxyäthyl)-anilin und p,p'-Bis-(12-hydroxyäthylamino)-diphenylmethan, herstellen. Man kann sie ferner aus einkernigen Phenolen wie Resorcin und Hydrochinon, und mehrkernigen Phenolen wie Bis-(4-hydroxyphenyl)-methan (sonst als Bisphenol F bekannt), 4,4'-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan (sonst als Bisphenol A bekannt), 2,2-Bis-(3,5-dibrom-4-hydroxyphenyl)- propan sowie aus Aldehyden wie Formaldehyd, Acetaldehyd, Chloral und Furfural mit Phenol selbst und durch Chloratome oder Alkylgruppen mit jeweils bis zu neun Kohlenstoffatomen ringsubstituiertem Phenol wie 4-Chlorphenol, 2-Methylphenol

3

und 4-tert.-Butylphenol gebildeten Novolaken herstellen.

Poly-(N-glycidyl)-verbindungen, z. B. N-Glycidylderivate von Aminen wie Anilin, n-Butylamin, Bis-(4-aminophenyl)-methan und Bis-(4-methylaminophenyl)-methan, Triglycidylisocyanurat und N,N'-Diglycidylderivate von cyclischen Alkylenharnstoffen wie Äthylenharnstoff und 1,3-Propylenharnstoff sowie Hydantoinen, wie 5,5-Dimethylhydantoin kommen zwar in Betracht, sind aber nicht bevorzugt.

Poly-(S-glycidyl)-verbindungen, z. B. Di-(S-glycidyl)-derivate von Dithiolen wie Äthan-1,2-dithiol und Bis-(4-mercaptomethylphenyl)-äther kommen ebenfalls in Frage, doch werden auch diese nicht bevorzugt.

Epoxidharze mit an Heteroatome verschiedener Art gebundenen 2,3-Epoxipropylgruppen, z. B. Glycidyl-2-(glycidyloxy)-benzoat und p-(Glycidylamino)-phenyl-glycidyläther, sowie Gemische von Epoxidharzen sind ebenfalls verwendbar.

In den erfindungsgemäßen Massen besonders bevorzugt verwendete Epoxidharze sind gegebenenfalls vorverlängerte Glycidyläther zweiwertiger Phenole wie 2,2-Bis-(4-hydroxyphenyl)-propan und Bis-(4-hydroxyphenyl)-methan sowie zweiwertiger aliphatischer Alkohole wie Butan-1,4-diol.

Erfindungsgemäß einsetzbare Bortrifluoridkomplexe sind bekannt und können beispielsweise solche mit aliphatischen, araliphatischen, cycloaliphatischen oder heterocyclischen Aminen mit 2 bis 10 Kohlenstoffatomen und einer oder zwei primären, sekundären oder tertiären Aminogruppen darstellen. Komplexe mit Äthylamin, Diäthylamin, Trimethylamin, Isopropylamin, Di-sek.-butylamin, Benzylamin, Isophorondiamin (3-Aminomethyl-3,5,5-trimethylcyclohexylamin) oder Piperidin werden besonders bevorzugt.

Die als organisches Oxydationsmittel bevorzugten Peroxyde sind aliphatische, cycloaliphatische und aromatische Peroxyde (einschließlich Hydroperoxyden und Perestern) mit bis zu 20 Kohlenstoffatomen. Dazu gehören Diacylperoxyde wie Benzoylperoxyd, p-Chlorbenzoylperoxyd und Lauroylperoxyd, Dialkyl- und Dicycloalkylperoxyde wie tert.-Butylperoxyd, Cyclohexylperoxyd und Cumylperoxyd, Hydroperoxyde wie Cumolhydroperoxyd, Äthylmethylketonperoxyd, 1-Hydroxy-1'-hydroperoxydicyclohexylperoxyd und Cyclohexanonperoxyd sowie Peroxisäureester wie Diisopropyl-peroxidicarbonat, Di-tert.-butylperphthalat, tert.-Butylperacetat und tert.-Butylperbenzoat.

Als organisches Oxydationsmittel bevorzugte Chinone sind o-Chinone und p-Chinone (einschließlich Chinomethanen und Chinodimethanen) mit 6 bis 12 Kohlenstoffatomen, wie Chloranil, 2,3-Dichlor-5,6-dicyanbenzochinon, Tetrachlor-o-benzochinon, $\alpha$-Naphthochinon und Tetracyanchinodimethan.

Als organisches Oxydationsmittel bevorzugte aromatische Jodosoverbindungen enthalten 6 bis 10 Kohlenstoffatome und umfassen Jodosobenzol, Jodosobenzoldiacetat, Jodosobenzol-bis-trifluoracetat, 4-Nitrojodosobenzol und 4-Chlorjodosobenzoldiacetat.

Man setzt eine wirksame, d. h. heißhärtende Menge des Gemischs aus Bortrifluoridkomplex (b) und organischem Oxydationsmittel (c) ein. Der Anteil an (a), (b) und (c) richtet sich nach der Art des Komplexes (b), dem organischen Oxydationsmittel (c) und dem speziellen Harz (a) sowie nach der erforderlichen Härtungsgeschwindigkeit und den im Endprodukt erwünschten Eigenschaften. Ein Fachmann in der Heißhärtung von Epoxidharzen kann leicht geeignete Anteile festlegen. Üblicherweise verwendet man 1 bis 15, vorzugsweise 4 bis 12,5 Gewichtsteile des Gemischs aus (b) und (c) auf 100 Gewichtsteile Harz (a). Im allgemeinen wird 1 Teil des Bortrifluoridkomplexes (b) mit 0,5 bis 3 Gewichtsteilen organischem Oxydationsmittel (c) verwendet.

Der Bortrifluoridkomplex (b) und das organische Oxydationsmittel (c) lassen sich leicht in dem Epoxidharz dispergieren, indem man die drei Komponenten miteinander vermahlt oder den Komplex und das Oxydationsmittel mit $\gamma$-Butyrolacton anteigt und dann mit dem Epoxidharz vermischt.

Die Temperaturen, auf welche die Zusammensetzungen zu erhitzen sind, und die Dauer des Erhitzens zur weitgehend vollständigen Umwandlung in den gehärteten Zustand lassen sich leicht durch Serienversuche festlegen; typischerweise erhitzt man auf eine Temperatur im Bereich von 75°C bis 200°C, insbesondere 90 bis 170°C, für einen Zeitraum von 1 bis 40 Minuten, üblicherweise 2 bis 20 Minuten.

Die neuen Massen können Zusatzstoffe wie Füllstoffe, Verstärkungsmaterialien, Farbstoffe, Verlaufmittel, flammhemmende Stoffe und Entformungsmittel enthalten. Beispiele für geeignete Streckmittel, Füllstoffe und Verstärkungsmaterialien sind Glasfasern, Glaskügelchen, Glimmer, Quarzpulver, Calciumcarbonat, Cellulose, Kaolin, Wollastonit, kolloidale Kieselsäure großer spezifischer Oberfläche, gepulvertes Polyvinylchlorid sowie gepulverte Polyolefinkohlenwasserstoffe wie Polyäthylen und Polypropylen.

Die erfindungsgemäßen härtbaren Massen lassen sich als Laminierharze, Anstriche und Lacke, Tränk-, Gieß- und Preßharze, Einbettungs- und Isoliermassen für die elektrische Industrie und als Klebstoffe sowie in der Herstellung solcher Produkte verwenden.

Die nachfolgenden Beispiele erläutern die Erfindung; dabei sind Teile und Prozentangaben stets Gewichtsteile und Gewichtsprozente. Die Beschleunigungswirkung wird wie üblich auf diesem Gebiet als die Verkürzung der zur Gelierung der Masse vor der Härtung erforderlichen Zeit angegeben: die Gelierungszeiten werden mittels eines »Techne«-Gelierungszeitmessers der Firma Techne (Cambridge) Limited, Duxford, Cambridge, England, bestimmt.

4

»Epoxidharz I«
    bedeutet einen Polyglycidyläther des 2,2-Bis-(4-hydroxyphenyl)-propans mit einem 1,2-Epoxidgehalt von 5,16 val/kg.
»Epoxidharz II«
    bedeutet 1,3-Diglycidyl-5,5-dimethylhydantoin.


## Beispiel 1

Man vermischt Epoxidharz I (15 g), Bortrifluorid/Monoäthylaminkomplex (0,67 g) und 1 g 50%ige Benzoylperoxyddispersion in Dibutylphthalat. Ein Teil dieses Gemischs wird bei 25°C gelagert und bleibt nach 1 Monat ungeliert. Der andere Teil davon wird auf 120°C erhitzt; Gelierung erfolgt nach 14 Minuten.

Der Versuch wird wiederholt, unter Ersatz des Benzoylperoxyds durch 0,4 g Jodosobenzol-bis-trifluoracetat. Gelierung erfolgt ebenfalls nach 14 Minuten.

Wird der Versuch unter Weglassung jeglichen Oxydationsmittels wiederholt, so tritt Gelierung erst nach 55 Minuten Erhitzen ein.


## Beispiel 2

Man vermischt Epoxidharz I (15 g), 0,67 g einer 52%igen Lösung von Isophorondiamin/Bis-bortrifluoridkomplex in Methanol und 1 g einer 50%igen Benzoylperoxyddispersion in Dibutylphthalat und erhitzt eine Probe auf 120°C. Gelierung tritt nach 34 Minuten ein. Bei Wiederholung des Versuchs ohne das Benzoylperoxyd erfolgt Gelierung erst nach 62 Minuten bei 120°C.


## Beispiel 3

Bortrifluorid/Monoäthylaminkomplex (0,45 g) und 2,3-Dichlor-5,6-dicyanbenzochinon (0,45 g) werden mit 0,9 g $\gamma$-Butyrolacton angeteigt und dann in Epoxidharz I (15 g) dispergiert. Das Gemisch wird auf 160°C erhitzt, und Gelierung tritt nach 4 Minuten ein.

Der Versuch wird wiederholt, unter Ersatz des Dichlordicyanbenzochinons durch Jodosobenzoldiacetat (0,90 g). Gelierung erfolgt nach 8 Minuten bei 160°C.

Wird der Versuch in Abwesenheit jeglichen organischen Oxydationsmittels wiederholt, so tritt Gelierung erst nach 11 Minuten bei 160°C ein.


## Beispiel 4

Man vermischt Epoxidharz I (15 g), Bortrifluorid/Trimethylaminkomplex (0,6 g) und 1 g einer 50%igen Benzoylperoxyddispersion in Dibutylphthalat und erhitzt auf 140°C.

Gelierung tritt nach $15^1/_2$ Stunden ein. Bei Wiederholung des Versuchs ohne das Benzoylperoxyd ist beim Abbrechen des Erhitzens nach 24 Stunden noch keine Gelierung eingetreten.


## Beispiel 5

Die nachfolgenden Massen werden hergestellt und 11 Wochen lang bei 25°C gelagert, wobei ihre Viskosität bei 25°C von Zeit zu Zeit bestimmt wird. Dann ermittelt man ihre Gelierungszeiten bei 120°C.

Tabelle 1

|  | Masse a | Masse b |
| --- | --- | --- |
| Epoxidharz I | 40 Teile | 40 Teile |
| Bortrifluorid/Monoäthylamin | 1,8 Teile | 1,8 Teile |
| Benzoylperoxyddispersion in Dibutylphthalat | — | 2,67 Teile |
| Anfangsviskosität | 15,1 Pa s | 1,0 Pa s |
| Viskosität nach 4 Wochen | 30,5 Pa s | 21,5 Pa s |
| Viskosität nach 11 Wochen | 52,6 Pa s | 51,0 Pa s |
| Gelierungszeit | 95 Minuten | 24 Minuten |

Es ist ersichtlich, daß die Beschleunigungswirkung des Oxydationsmittels (Masse b) ohne Verlust an Lagerfähigkeit erzielt wird.

Beispiel 6

Man verfährt wie in Beispiel 5, unter Verwendung eines anderen Bortrifluoridkomplexes und mit einer Lagerungszeit von 9 Wochen. Die Ergebnisse sind wie folgt:

Tabelle 2

|  | Masse c | Masse d |
| --- | --- | --- |
| Epoxidharz I | 90 Teile | 90 Teile |
| Komplex aus Bortrifluorid (2 Mol) mit Isophorondiamin (1 Mol) | 2 Teile | 2 Teile |
| Benzoylperoxyddispersion (50%) in Dibutylphthalat | — | 6 Teile |
| Anfangsviskosität | 12,0 Pa s | 8,0 Pa s |
| Viskosität nach 9 Wochen | 25,5 Pa s | 21,0 Pa s |
| Gelierungszeit | 61 Minuten | 48 Minuten |

Dies zeigt wiederum deutlich, daß die Beschleunigungswirkung eines Oxydationsmittels (Masse d) nicht durch Verlust an Lagerfähigkeit erkauft wird.

Beispiel 7

Man vermischt Epoxidharz II (150 Teile), Bortrifluorid/Triäthylaminkomplex (5 Teile) und eine Benzoylperoxyddispersion (50%) in Dibutylphthalat (2,5 Teile) und erhitzt auf 120°C. Gelierung tritt nach 16 Minuten ein. Bei Wiederholung des Versuchs, jedoch unter Weglassung des Benzoylperoxyds, erfolgt Gelierung erst nach 25 Minuten.

# 0 086 744

## Patentansprüche

1. Heißhärtbare Massen, im wesentlichen frei von ungesättigtem polymerisierbarem Material, dadurch gekennzeichnet, daß sie aus

(a) einem mehr als eine 2,3-Epoxipropylgruppe pro Durchschnittsmolekül enthaltenden Epoxidharz und einer heißhärtenden Menge eines Gemisches aus,
(b) einem Bortrifluorid/Aminkomplex als latentem Härter für Epoxidharze und
(c) einem unter Chinonen, Peroxyden und aromatischen Jodosoverbindungen ausgewählten organischen Oxydationsmittel

bestehen.

2. Massen nach Anspruch 1, dadurch gekennzeichnet, daß in dem Epoxidharz (a) die 2,3-Epoxipropylgruppen direkt an ein Sauerstoffatom bzw. -atome gebunden sind.

3. Massen nach Anspruch 1 oder 2, dadurch gekennzeichnet, daß das Bortrifluorid als Komplex mit einem aliphatischen, araliphatischen, cycloaliphatischen oder heterocyclischen Amin mit 2 bis 10 Kohlenstoffatomen und einer oder zwei primären, sekundären oder tertiären Aminogruppen vorliegt.

4. Massen nach Anspruch 3, dadurch gekennzeichnet, daß das Bortrifluorid als Komplex mit Äthylamin, Diäthylamin, Trimethylamin, Isopropylamin, Di-sek.-butylamin, Benzylamin, Isophorondiamin oder Piperidin vorliegt.

5. Massen nach einem der Ansprüche 1 bis 4, dadurch gekennzeichnet, daß als organisches Oxydationsmittel (c) ein aliphatisches, cycloaliphatisches oder aromatisches Peroxyd (einschließlich Hydroperoxyden und Perestern) mit bis zu 20 Kohlenstoffatomen vorliegt.

6. Massen nach einem der Ansprüche 1 bis 4, dadurch gekennzeichnet, daß als organisches Oxydationsmittel (c) ein o-Chinon (einschließlich Chinomethanen und Chinodimethanen) mit 6 bis 12 Kohlenstoffatomen vorliegt.

7. Massen nach einem der Ansprüche 1 bis 4, dadurch gekennzeichnet, daß als organisches Oxydationsmittel (c) eine aromatische Jodosoverbindung mit 6 bis 10 Kohlenstoffatomen vorliegt.

8. Massen nach einem der vorhergehenden Ansprüche, dadurch gekennzeichnet, daß sie 1 bis 15 Gewichtsteile des Gemischs aus latentem Härter (b) und organischem Oxydationsmittel (c) auf 100 Gewichtsteile Harz (a) enthalten.

9. Massen nach einem der vorhergehenden Ansprüche, dadurch gekennzeichnet, daß sie 1 Gewichtsteil latenten Härter (b) auf 0,5 bis 3 Gewichtsteile organisches Oxydationsmittel (c) enthalten.

10. Verwendung der heißhärtbaren Massen gemäß Anspruch 1 zur Herstellungen von Formstoffen, Beschichtungen oder Verklebungen.

## Claims

1. A heat-curable composition, substantially free from any unsaturated polymerisable material, which composition comprises

(a) an epoxide resin containing more than one 2,3-epoxypropyl group per average molecule and a heat-curable amount of a mixture of
(b) a boron trifluoride-amine complex as latent hardener for epoxide resins and
(c) an organic oxidant selected from quinones, peroxides, and iodosoaromatic compounds.

2. A composition according to claim 1, in which in the epoxide resin (a) the 2,3-epoxypropyl groups are directly attached to an oxygen atom or atoms.

3. A composition according to either of claims 1 or 2, in which the boron trifluoride is complexed with an aliphatic, araliphatic, cycloaliphatic or heterocyclic amine containing 2 to 10 carbon atoms and one or two primary, secondary or tertiary amino groups.

4. A composition according to claim 3, in which the boron trifluoride is complexed with ethylamine, diethylamine, trimethylamine, isopropylamine, di-sec-butylamine, benzylamine, isophoronediamine or piperidine.

5. A composition according to any of claims 1 to 4, in which the organic oxidant (c) is an aliphatic, cycloaliphatic or aromatic peroxide (including hydroperoxides and peresters) containing up to 20 carbon atoms.

6. A composition according to any of claims 1 to 4, in which the organic oxidant (c) is an o-quinone or a p-quinone (including quinomethanes and quinodimethanes) containing 6 to 12 carbon atoms.

7. A composition according to any of claims 1 to 4, in which the organic oxidant (c) is an iodosoaromatic compound containing 6 to 10 carbon atoms.

8. A composition according to any one of the preceding claims containing 1 to 15 parts by weight of the mixture of the latent hardener (b) and the organic oxidant (c) per 100 parts by weight of the resin (a).

7

9. A composition according to any one of the preceding claims containing 1 part by weight of the latent hardener (b) per 0.5 to 3 parts by weight of the organic oxidant (c).

10. Use of a heat-curable composition according to claim 1 for the preparation of moulding materials, coatings or bonds.

## Revendications

1. Matières thermodurcissables ne contenant presque pas de substances non saturées polymérisables, caractérisées en ce qu'elles sont constituées

(a) d'une résine époxydique contenant en moyenne plus d'un radical époxy-2,3 propyle par molécule et d'une quantité thermodurcissable d'un mélange
(b) d'un complexe aminé de trifluorure de bore, comme durcisseur latent des résines époxydiques
(c) d'un oxydant choisi parmi les quinones, les peroxydes et les composés iodosés aromatiques.

2. Matières selon la revendication 1, caractérisées en ce que les radicaux époxy-2,3 propyles dans la résine époxydique (a) sont directement portés par un ou des atomes d'oxygène.

3. Matières selon l'une quelconque des revendications 1 et 2, caractérisées en ce que le trifluorure de bore est sous la forme d'un complexe d'une amine aliphatique, araliphatique, cycloaliphatique ou hétérocyclique, contenant de 2 à 10 atomes de carbone et un groupe amino primaire, secondaire ou tertiaire.

4. Matières selon la revendication 3, caractérisées en ce que le trifluorure de bore est sous la forme d'un complexe d'éthylamine, de diéthylamine, de triméthylamine, d'isopropylamine, de di-sec-butylamine, de benzylamine, d'isophorondiamine ou de pipéridine.

5. Matières selon l'une quelconque des revendications 1 à 4, caractérisées en ce que l'oxydant (c) est un peroxyde (y compris un hydroperoxyde et un perester) aliphatique, cycloaliphatique ou aromatique, contenant jusqu'à 20 atomes de carbone.

6. Matières selon l'une quelconque des revendications 1 à 4, caractérisées en ce que l'oxydant (c) est une o-quinone ou une p-quinone (y compris un quinométhane et un quinodiméthane) contenant de 6 à 12 atomes de carbone.

7. Matières selon l'une quelconque des revendications 1 à 4, caractérisées en ce que l'oxydant (c) est un composé aromatique iodosé contenant de 6 à 10 atomes de carbone.

8. Matières selon l'une quelconque des revendications précédentes, caractérisées en ce qu'elle contiennent de 1 à 15 parties pondérales du mélange du durcisseur latent (b) et de l'oxydant organique (c) pour 100 parties pondérales de résine.

9. Matières selon l'une quelconque des précédentes revendications, caractérisées en ce qu'elles contiennent une partie pondérale de durcisseur latent (b) pour 0,5 à 3 parties pondérales d'oxydant organique (c).

10. Application des matières thermodurcissables selon la revendication 1 à la fabrication d'objets moulés, d'enduits ou d'encollages.